# EUROPÄISCHE PATENTSCHRIFT

(11) **EP 1 582 669 B1**
(45) Veröffentlichungstag und Bekanntmachung des Hinweises auf die Patenterteilung: **18.08.2010**
(21) Anmeldenummer: 04030540.1
(22) Anmeldetag: 23.12.2004
(51) Int. Cl.: E05B 65/19, E05B 1/00, B62D 25/20

(54) **Betätigungseinrichtung zum Entriegeln eines bewegbaren Deckels eines Kraftfahrzeugs**
Actuation device for unlocking of a motor vehicle lid
Dispositif d'actionnement pour le déverrouillage d'un capot d'un véhicule automobile

(30) Priorität: 30.03.2004 DE 102004015348
(43) Veröffentlichungstag der Anmeldung: 05.10.2005
(73) Patentinhaber: Dr. Ing. h.c. F. Porsche AG, 70435 Stuttgart (DE)
(72) Erfinder: Nabert, Bernd, 72296 Schopfloch (DE); Lutz, Erwin, 71701 Schwieberdingen (DE); Diehm, Frank, 74366 Kirchheim (DE)

(56) Entgegenhaltungen:
- EP-A- 0 774 554
- WO-A-02/48486
- DE-A1- 19 856 902
- DE-C1- 19 546 063

## Beschreibung

Bei der Erfindung wird ausgegangen von einer Betätigungseinrichtung für wenigstens einen bewegbaren Deckel eines Kraftfahrzeugs, gemäß Oberbegriff des Anspruchs 1.

Eine gattungsbildende Betätigungseinrichtung ist der EP 0 778 386 B1 zu entnehmen. Die Betätigungseinrichtung ist an einer einem Fahrzeuginnenraum zugewandten Seite eines Schwellers eines Kraftfahrzeugs anordenbar. Sie umfasst eine Schwellerverkleidung, an der ein Lagergehäuse angeordnet ist, an dem ein Auslöseelement für die Entriegelung des Deckels gehalten ist. Das Auslöseelement ist als schwenkbar gelagerter Hebel ausgeführt, der über eine Zugeinrichtung mit einem Deckelschloss verbunden ist. Bei der bekannten Betätigungseinrichtung ist das Lagergehäuse einstückig mit der Schwellerverkleidung ausgeführt.

Aufgabe der Erfindung ist es, eine Betätigungseinrichtung der eingangs genannten Art zu schaffen, die einfach hergestellt werden kann.

Gelöst wird diese Aufgabe mit einer Betätigungseinrichtung, die die in Anspruch 1 genannten Merkmale aufweist. Weitere Ausgestaltungen der Erfindung sind in den Unteransprüchen angegeben.

Die mit der Erfindung hauptsächlich erzielten Vorteile sind einerseits durch die zweiteilige Ausführung der Betätigungseinrichtung mit der Schwellerverkleidung und dem separaten Lagergehäuse gegeben, da sich dadurch bei der Herstellung solcher Teile, in den meisten Fällen aus Kunststoff, einfache Herstellformen ergeben, und andererseits durch das mit einer Hintergriffskontur ausgestaltete Führungsmittel ein festes Verbinden von Lagergehäuse und Schwellerverkleidung erzielt wird, so dass zwischen Lagergehäuse und dem Einschubschacht an der Schwellerverkleidung kein bzw. nur ein geringer Spalt vorliegt, wodurch sich ein optisch hochwertiges Erscheinungsbild ergibt. Ferner ist vorteilhaft, dass - ohne Änderungen an der Schwellerverkleidung vornehmen zu müssen - unterschiedliche Lagergehäuse für unterschiedliche Ausstattungen des Kraftfahrzeugs verwendet werden könnten. So können unterschiedliche Lagergehäuse mit einem oder mehreren Auslöseelementen für entsprechende Teile des Kraftfahrzeugs in die Schwellerverkleidung eingesetzt werden.

Mit den in Anspruch 3 genannten Merkmalen wird erreicht, dass umlaufend zwischen dem Einschubschacht und dem Lagergehäuse eine ungleichmäßige Spaltbildung vermieden wird.

Durch die in Anspruch 4 angegeben Merkmale ist eine einfache und schnelle Montage und gleichzeitig eine sichere Befestigung des Lagergehäuses an der Schwellerverkleidung erzielt, da beim vollständigen Einschieben der Lagergehäuses die Rastverbindung wirksam werden kann.

Bevorzugt wird eine Ausführungsform gemäß Anspruch 6, nach der eine Montage der Betätigungseinrichtung am rechten oder linken Schweller vorgenommen werden kann. Die Zuordnung eines Auslöseelements für einen jeweiligen Deckel bleibt erhalten, da lediglich die Schwellerverkleidung entsprechend ihrem Montageort gedreht wird, das Lagergehäuse mit den Auslöseelementen aber bezüglich dem Fahrzeugbug bzw. dem Fahrzeugheck gleich ausgerichtet bleibt. Insbesondere ist dies vorteilhaft, wenn die Auslöseelemente - gemäß einem bevorzugten Ausführungsbeispiel nach Anspruch 7 - mit unterschiedlichen Symbolen versehen sind, die beispielsweise den vorderen und hinteren Deckel zeigen, und das Lagergehäuse entsprechend lagerichtig zu den Deckeln in die Schwellerverkleidung eingeschoben werden soll. Das Lagergehäuse und die Schwellerverkleidung sind also ohne weiteres für Links - bzw. Rechtslenkerfahrzeuge einsetzbar.

Nach einem in Anspruch 9 angeführten Ausführungsbeispiel kann ein Lagergehäuse an der Schwellerverkleidung befestigt werden, das in einer Variante zusätzlich oder alternativ zum dem zumindest einen Auslöseelement ein Betätigungselement, vorzugsweise elektrischer Schalter, für ein anderes Teil des Kraftfahrzeugs aufweist.

Die Erfindung wird nachfolgend anhand von Ausführungsbeispielen mit Bezug auf die Zeichnung näher erläutert. Es zeigen:
- Fig. 1: in einer Perspektive ein Kraftfahrzeug mit einem vorderen und hinteren Deckel sowie mit einer Betätigungseinrichtung zum Entriegeln der Deckel,
- Fig. 2: in Detailansicht die Betätigungseinrichtung mit einer Schwellerverkleidung und einem Lagergehäuse mit Auslöseelementen,
- Fig. 3: einen vergrößerten Ausschnitt der Schwellerverkleidung,
- Fig. 4: eine Darstellung der Betätigungseinrichtung in einem Teilschnitt gemäß Linie IV - IV in Fig. 2 und
- Fig. 5: einen Teilschnittschnitt entlang der Linie V - V in Fig. 4.

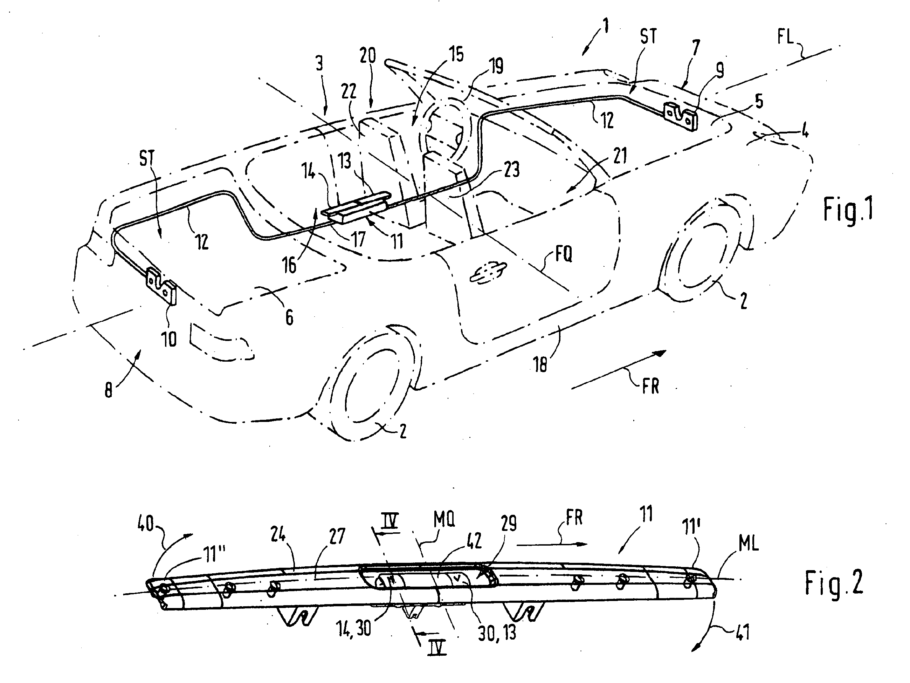

Ein in Fig. 1 dargestelltes Kraftfahrzeug 1, insbesondere Personenwagen, besitzt einen von Rädern 2 getragenen Aufbau 3, der eine Karosserie 4 umfasst, die zumindest eine Öffnung aufweist, in die ein bewegbarer, insbesondere schwenkbarer Deckel 5 eingesetzt ist. Im gezeigten Ausführungsbeispiel sind zwei Öffnungen und demgemäß zwei Deckel 5 und 6 vorgesehen, von denen einer benachbart zum Fahrzeugbug 7 und einer benachbart zum Fahrzeugheck 8 angeordnet ist. In Fig. 1 sind beide Deckel 5 und 6 in ihrer Schließstellung ST gezeigt und in dieser Schließstellung ST jeweils von einem Deckelschloss 9 bzw. 10 gehalten. Um die bzw. den Deckel 5 bzw. 6 öffnen zu können, kann über eine entfernt von den Deckelschlössern 9 und 10 am Fahrzeug 1 angeordnete Betätigungseinrichtung 11 das jeweilige Schloss 9 bzw. 10 selektiv entriegelt werden. Die Betätigungseinrichtung 11 steht mit den Schlössern 9 und 10 über jeweils eine Leitung 12 in Verbindung. Vorzugsweise sind die Schlösser 9 und 10 zum Entriegeln elektrisch ansteuerbar, wofür an der Betätigungseinrichtung 11 jeweils ein den Schlössern 9 und 10 zugeordnetes Auslöseelement 13 bzw. 14, insbesondere Schalter, gehalten ist und die Leitung als elektrische Leitung 12 ausgeführt ist.

Die Betätigungseinrichtung 11 ist an einer einem Fahrzeuginnenraum 15 zugeordneten Seite 16 eines Schwellers 17 bzw. 18 angeordnet, die dem Aufbau 3 angehören. Im dargestellten Ausführungsbeispiel ist das Fahrzeug 1 als so genannter Linkslenker mit einem Lenkrad 19 an der linken Fahrzeugseite 20 ausgebildet und die Deckel 5 und 6 können von der Fahrerseite (Fahrzeugseite 20) aus entriegelt werden. In einem anderen Ausführungsbeispiel kann das Fahrzeug 1 als Rechtslenker realisiert sein, bei dem dann das Lenkrad 19 an der rechten Fahrzeugseite 21 im Innenraum 15 angeordnet ist. Insbesondere ist vorgesehen, dass die Betätigungseinrichtung 11 seitlich neben dem jeweiligen vorderen Fahrzeugsitz 22 oder 23 am Schweller 17 oder 18 befestigt ist.

Anhand der Fig. 2 bis 5 wird die Betätigungseinrichtung 11 näher beschrieben. Die Betätigungseinrichtung 11 weist eine Mittellängsachse ML auf, die etwa parallel und mit seitlichem Abstand zu einer in Fig. 1 eingezeichneten Fahrzeuglängsachse FL verläuft; sie besitzt ferner eine Mittelquerachse MQ, die parallel und mit Abstand zu einer in Fig. 1 gezeigten Fahrzeugquerachse FQ verläuft. Die Betätigungseinrichtung 11 umfasst eine mit dem Schweller 17 bzw. 18 verbindbare Schwellerverkleidung 24, die etwa plattenförmig, insbesondere an die Schwellerkontur des Schwellers 17 bzw. 18 an der Seite 16 angepasst ausgeführt ist. Bezüglich der Mittellängsachse ML und/oder der Mittelquerachse MQ ist mittig in die Schwellerverkleidung 24 ein Einschubschacht 25 mit einer aufrechten, vorzugsweise umlaufenden Schachtwand 26 eingebracht, welcher Einschubschacht 25 auf der Oberseite 27 der Schwellerverkleidung 24 in einer Einschuböffnung 28 mündet. Über die Einschuböffnung 28 wird in den Einschubschacht 25 ein Lagergehäuse 29 eingesetzt, das die Auslöseelemente 13 und 14 trägt, die vorzugsweise als Tasten 30 von hier nicht dargestellten elektrischen Schaltern ausgeführt sind.

Zwischen der Schachtwand 26 und dem Lagergehäuse 29 ist ein Führungsmittel 31 vorgesehen, das in Einschubrichtung 32 des Lagergehäuses 29 ausgerichtet ist und eine Hintergriffskontur 33 aufweist, insbesondere in Form einer Schwalbenschanzverbindung. Denkbar wären andere Hintergriffskonturen 33, beispielsweise L - , T - förmige oder kreis - bzw. halbkreisförmige Konturen. Das Führungsmittel 31 ist zumindest bezüglich der Mittelquerachse MQ und/oder der Mittellängsachse ML symmetrisch an dem ebenfalls symmetrisch zu diesen Achsen MQ und/oder ML ausgeführten Einschubschacht 25 bzw. Lagergehäuse 29 angeordnet. So sind mehrere Führungsschienen 34 und Schienenaufnahmen 35 als Führungsmittel 31 vorgesehen, die im Querschnitt die Hintergriffskontur 33 aufweisen und entsprechend paarweise mit Abstand AB zur Mittelquerachse MQ verteilt zwischen der Schachtwand 26 und dem Lagergehäuse 29 angeordnet sind. Im gezeigten Ausführungsbeispiel sind die Führungsschienen 34 an der Schachtwand 26 diese überragend angeordnet und entsprechend die Schienenaufnahmen 35 in einer Lagergehäusewand 36 des Lagergehäuses 29 ausgebildet. Eine umgekehrte Anordnung wäre möglich.

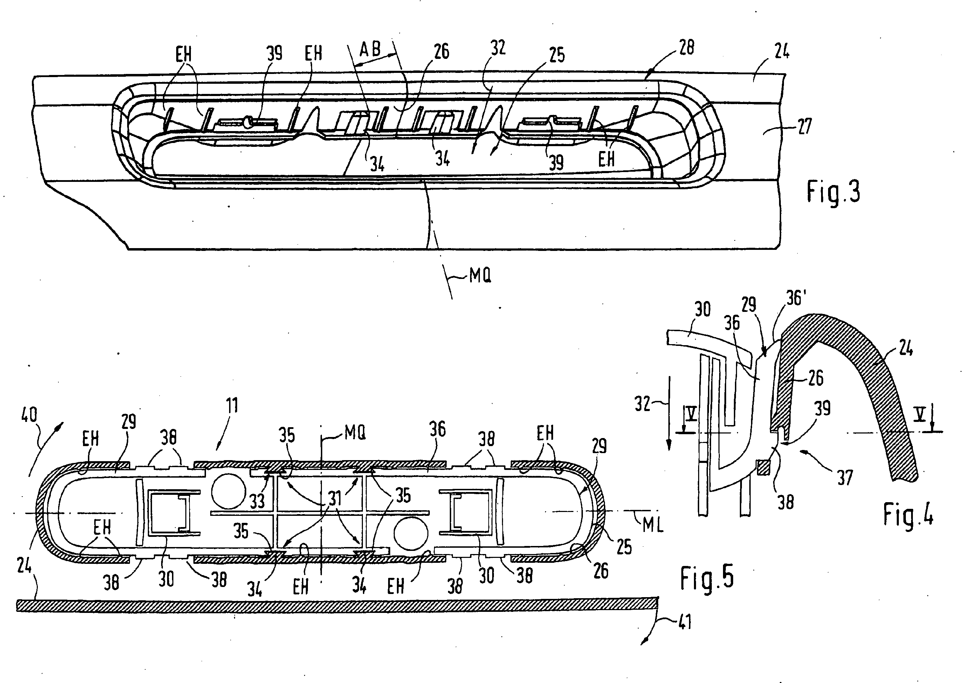

Um das Lagergehäuse 29 nach dem Einschieben in den Schacht 25 mit der Schwellerverkleidung 24 verbinden bzw. darin halten zu können, ist noch eine Befestigungseinrichtung 37 vorgesehen. Bevorzugt ist diese als ein oder mehrere Rastverbindungen ausgeführt, die zwischen der Schachtwand 26 und dem Lagergehäuse 29 bzw. dessen Gehäusewand 36 wirkt. In Fig. 4 ist die Rastverbindung dargestellt, die im Ausführungsbeispiel wenigstens eine Rastnase 38 und eine zugeordnete Rastöse 39 umfasst, welche Rastnase 38 beispielsweise federnd ausgebildet ist, jedenfalls in die Rastöse 39 eingreift. Es können an der Schachtwand 26 und entsprechend an der Gehäusewand 36 verteilt mehrere Rastverbindungen ausgebildet sein. Beispielsweise auf der Schachtwand 26 oder der Gehäusewand 26 sind noch ein oder mehrere Erhebungen EH, beispielsweise in Form von Stegen, verteilt angeordnet, an denen sich die Lagergehäusewand 36 abstützt, wodurch ein Spiel zwischen Schachtwand 26 und Lagergehäusewand 36 ausgeglichen ist. Aus Fig. 4 ist ersichtlich, dass die Lagergehäusewand 36 freistehend und ggf. federnd ausgebildet ist und sich mit ihrem freien Ende 36' an der Schachtwand 26 abstützt. Durch die Hintergriffskontur 33 des Führungsmittels 31 wird die Lagergehäusewand 36 an der Schachtwand 26 fest gehalten.

In Fig. 2 sind Symbole V bzw. H auf den Tasten 30 bzw. Auslöseelementen 13 bzw. 14 angebracht, wodurch jedes Auslöselement 13 und 14 jeweils einem der Deckel 5 und 6 zugeordnet werden kann. Fig. 2 zeigt die Einbaulage der Betätigungseinrichtung 11 für das in Fig. 1 dargestellte Linkslenker - Fahrzeug 1 am linken Schweller 17. Dabei wird die Betätigungseinrichtung 11 in Pfeilrichtung FR (Fig. 1 und 2) ausgerichtet, die vom Fahrzeugheck 8 in Richtung Fahrzeugbug 7 weist und somit der Fahrtrichtung bei Vorwärtsfahrt entspricht. Ein Ende 11' der Schwellerverkleidung 24 weist somit in Richtung Fahrzeugbug 7, während ein anderes Ende 11" der Schwellerverkleidung 24 zum Heck 8 zeigt. Das mit dem Symbol V gekennzeichnete Auslöseelement 13 liegt somit benachbart zum Ende 11' und das mit dem Symbol H versehene Auslöseelement 14 ist dem Ende 11" zugeordnet. Um die Betätigungseinrichtung 11 für ein Rechtslenker - Fahrzeug am rechten Schweller 18 verwenden zu können, wird die Schwellerverkleidung 24 um 180° ohne das Lagergehäuse 29 gedreht, was durch Pfeile 40 und 41 in den Fig. 2 und 5 angedeutet ist. Das heißt, das Ende 11' zeigt nun in Richtung Heck 8 und das Ende 11" weist auf den Bug 7. Die in Fig. 2 gezeigte Orientierung des Lagergehäuse 29 mit den Auslöseelementen 13 und 14 für den vorderen und hinteren Deckel 5 und 6 bleibt jedoch erhalten, so dass die Taste 30 mit dem Symbol V weiter dem vorderen Deckel 5 bzw. nun dem Ende 11" der Schwellerverkleidung 24 und die Taste 30 mit dem Symbol H dem hinteren Deckel 6 bzw. nun dem Ende 11' zugeordnet ist. Die Schwellerverkleidung 24 ist zumindest bezüglich der Mittelquerachse MQ symmetrisch und das Lagergehäuse 29 vorzugsweise symmetrisch zur Mittelquerachse MQ und zur Mittellängsachse ML realisiert. Zumindest der Einschubschacht 25 der Schwellerverkleidung ist überdies auch zur Mittellängsachse ML symmetrisch ausgebildet.

Zwischen den Tasten 30 bzw. den Auslöseelementen 13, 14 ist im Ausführungsbeispiel eine ggf. abnehmbare Blende 42 am Lagergehäuse 29 angeordnet. An Stelle der Blende 42 könnte zumindest ein weiteres, hier nicht dargestelltes Auslöseelement für ein anderes zu entriegelndes oder zu betätigendes Teil, beispielsweise Tankklappe oder ähnliches, des Kraftfahrzeugs 1 angeordnet sein. Zusätzlich oder alternativ kann an Stelle des/der Auslöseelemente bzw. der Blende 42 ein Betätigungselement bzw. Bedienelement für ein Teil, beispielsweise ein zu bewegendes Cabrio - Verdeck oder ähnliches, des Kraftfahrzeugs 1 am Lagergehäuse 29 angeordnet sein.

## Patentansprüche

1. Betätigungseinrichtung (11) zum Entriegeln wenigstens eines bewegbaren Deckels (5, 6) eines Kraftfahrzeugs (1), die an der einem Fahrzeuginnenraum (15) zugewandten Seite eines Schwellers (17, 18) des Kraftfahrzeugs (1) anordenbar ist, mit einer Schwellerverkleidung (24) und zumindest einem an einem Lagergehäuse (29) gehaltenen Auslöseelement (13, 14, 30) welches Lagergehäuse (29) an der Schwellerverkleidung (24) angeordnet ist, **dadurch gekennzeichnet, dass** die Schwellerverkleidung (24) einen Einschubschacht (25) für das Lagergehäuse (29) aufweist, zwischen dessen Schachtwand (26) und einer Lagergehäusewand (36) ein in Einschubrichtung (32) verlaufendes Führungsmittel (31) vorgesehen ist, welches Führungsmittel (31) eine Führungsschiene (34) und eine Schienenaufnahme (35) aufweist, dass das Führungsmittel (31) - im Querschnitt gesehen - als Hintergriffskontur (33) ausgebildet ist, und dass eine Befestigungseinrichtung (37) für das Lagergehäuse (29) an der Schwellerverkleidung (24) vorgesehen ist.

2. Betätigungseinrichtung nach Anspruch 1, **dadurch gekennzeichnet, dass** die Hintergriffskontur (33) als Schwalbenschwanzkontur ausgebildet ist.

3. Betätigungseinrichtung nach Anspruch 1, **dadurch gekennzeichnet, dass** das Führungsmittel (31) mehrere Führungsschienen (34) und Schienenaufnahmen (35) aufweist, die entsprechend an der Schachtwand (26) und der Lagergehäusewand (36) verteilt angeordnet sind.

4. Betätigungseinrichtung nach Anspruch 1, **dadurch gekennzeichnet, dass** die Befestigungseinrichtung (37) als Rastverbindung ausgebildet ist.

5. Betätigungseinrichtung nach Anspruch 4, **dadurch gekennzeichnet, dass** die Rastverbindung zwischen Schachtwand (26) und Lagergehäuesewand (36) angeordnet ist.

6. Betätigungseinrichtung nach Anspruch 1, **dadurch gekennzeichnet, dass** die Schwellerverkleidung (24) und das Lagergehäuse (29) bezüglich einer Mittelquerachse (MQ), die parallel zur Fahrzeugquerachse (FQ) verläuft, symmetrisch ausgebildet sind, dass das Führungsmittel (31) symmetrisch zu dieser Mittelquerachse (MQ) angeordnet ist, dass an dem Lagergehäuse (29) zwei Auslöseelemente (13, 14) angeordnet sind und dass das Lagergehäuse (29) und der Einschubschacht (25) bezüglich einer Mittellängsachse (ML), die parallel zur Fahrzeuglängsachse (FL) verläuft, symmetrisch ausgebildet sind.

7. Betätigungseinrichtung nach einem der vorhergehenden Ansprüche , **dadurch gekennzeichnet, dass** zwei Auslöseelemente (13, 14) vorgesehen sind, die jeweils ein unterschiedliches Symbol (V, H) aufweisen, das dem jeweiligen Deckel (5, 6) zugeordnet ist.

8. Betätigungseinrichtung nach einem der vorhergehenden Ansprüche **dadurch gekennzeichnet, dass** zwischen dem Lagergehäuse (29) ein Blende (42) angeordnet ist.

9. Betätigungseinrichtung nach Anspruch 8, **dadurch gekennzeichnet, dass** an Stelle der Blende (42) ein weiteres Auslöseelement (13, 14) und/oder ein Bedienelement für ein Teil des Kraftfahrzeugs (1) vorgesehen ist.

## Claims

1. Actuation device (11) for unlocking at least one removable lid (5, 6) of a motor vehicle (1), which actuation device can be arranged on a side of a door sill (17, 18) of the motor vehicle (1) that faces a vehicle interior (15), with a door sill trim (24) and with at least one release element (13, 14, 30) held on a bearing housing (29), which bearing housing (29) is arranged on the door sill trim (24), **characterized in that** the door sill trim (24) has an insert slot (25) for the bearing housing (29), between the slot wall (26) of which and a bearing housing wall (36) a guide means (31) running in the insert direction (32) is provided, which guide means (31) has a guide rail (34) and a rail holder (35), **in that** the guide means (31) is designed - seen in cross section - as a grip-behind contour (33), and **in that** a fastening device (37) for the bearing housing (29) is provided on the door sill trim (24).

2. Actuation device according to Claim 1, **characterized in that** the grip-behind contour (33) is designed as a dovetail contour.

3. Actuation device according to Claim 1, **characterized in that** the guide means (31) has a plurality of guide rails (34) and rail holders (35) which are correspondingly distributed on the slot wall (26) and the bearing housing wall (36).

4. Actuation device according to Claim 1, **characterized in that** the fastening device (37) is designed as a latching connection.

5. Actuation device according to Claim 4, **characterized in that** the latching connection is arranged between the slot wall (26) and bearing housing wall (36).

6. Actuation device according to Claim 1, **characterized in that** the door sill trim (24) and the bearing housing (29) are designed symmetrically with respect to a centre transverse axis (MQ) running parallel to the vehicle transverse axis (FQ), **in that** the guide means (31) is arranged symmetrically with respect to said central transverse axis (MQ), **in that** two release elements (13, 14) are arranged on the bearing housing (29), and **in that** the bearing housing (29) and the insert slot (25) are designed symmetrically with respect to a centre longitudinal axis (ML) running parallel to the vehicle longitudinal axis (FL).

7. Actuation device according to one of the preceding claims, **characterized in that** there are two release elements (13, 14) each having a different symbol (V, H) assigned to the respective lid (5, 6).

8. Actuation device according to one of the preceding claims, **characterized in that** a panel (42) is arranged between the bearing housing (29).

9. Actuation device according to Claim 8, **characterized in that** a further release element (13, 14) and/or an operating element for part of the motor vehicle (1) are/is provided instead of the panel (42).

## Revendications

1. Dispositif d'actionnement (11) pour le déverrouillage d'au moins un capot (5, 6) mobile d'un véhicule automobile (1), qui peut être disposé sur le côté tourné vers l'habitacle du véhicule (15) d'un bas de marche (17, 18) du véhicule automobile (1), avec un habillage de bas de marche (24) et au moins un élément de déclenchement (13, 14, 30) maintenu sur un boîtier de palier (29), lequel boîtier de palier (29) est disposé sur l'habillage de bas de marche (24), **caractérisé en ce que** l'habillage de bas de marche (24) présente une gaine d'insertion (25) pour le boîtier de palier (29), entre la paroi de gaine (26) de laquelle et une paroi du boîtier de palier (36) est prévu un moyen de guidage (31) s'étendant dans la direction d'insertion (32), lequel moyen de guidage (31) présente un rail de guidage (34) et un logement de rail (35), **en ce que** le moyen de guidage (31) - vu en section transversale - est réalisé sous forme de contour d'engagement par l'arrière (33), et **en ce qu'**un dispositif de fixation (37) est prévu pour le boîtier de palier (29) sur l'habillage de bas de marche (24).

2. Dispositif d'actionnement selon la revendication 1, **caractérisé en ce que** le contour d'engagement par l'arrière (33) est réalisé sous forme de contour en forme de queue d'aronde.

3. Dispositif d'actionnement selon la revendication 1, **caractérisé en ce que** le moyen de guidage (31) présente plusieurs rails de guidage (34) et logements de rail (35), qui sont disposés de manière répartie de façon correspondante sur la paroi de gaine (26) et la paroi du boîtier de palier (36).

4. Dispositif d'actionnement selon la revendication 1, **caractérisé en ce que** le dispositif de fixation (37) est réalisé sous forme de connexion par encliquetage.

5. Dispositif d'actionnement selon la revendication 4, **caractérisé en ce que** la connexion par encliquetage est disposée entre la paroi de gaine (26) et la paroi du boîtier de palier (36).

6. Dispositif d'actionnement selon la revendication 1, **caractérisé en ce que** l'habillage de bas de marche (24) et le boîtier de palier (29) sont réalisés de manière symétrique par rapport à un axe transversal médian (MQ) qui s'étend parallèlement à l'axe transversal du véhicule (FQ), **en ce que** le moyen de guidage (31) est disposé de manière symétrique par rapport à cet axe transversal médian (MQ), **en ce que** deux éléments de déclenchement (13, 14) sont disposés sur le boîtier de palier (29) et **en ce que** le boîtier de palier (29) et la gaine d'insertion (25) sont réalisés symétriquement par rapport à un axe longitudinal médian (ML), qui s'étend parallèlement à l'axe longitudinal du véhicule (FL).

7. Dispositif d'actionnement selon l'une quelconque des revendications précédentes, **caractérisé en ce que** deux éléments de déclenchement (13, 14) sont prévus, lesquels présentent à chaque fois un symbole différent (V, H), qui est associé au capot respectif (5, 6).

8. Dispositif d'actionnement selon l'une quelconque des revendications précédentes, **caractérisé en ce qu'**un bandeau (42) est disposé entre le boîtier de palier (29).

9. Dispositif d'actionnement selon la revendication 8, **caractérisé en ce que** l'on prévoit au lieu du bandeau (42) un autre élément de déclenchement (13, 14) et/ou un élément de commande pour une partie du véhicule automobile (1).
